# EUROPEAN PATENT APPLICATION

(11) **EP 3 200 470 A1**
(43) Date of publication of application: **02.08.2017**
(21) Application number: 16791516.4
(22) Date of filing: 10.07.2016
(51) Int. Cl.: H04N 21/434, H04N 21/43, H04N 21/81

(54) **PLAYING METHOD AND DEVICE FOR ANDROID PLATFORM, AND MOBILE TERMINAL DEVICE**

(30) Priority: 14.12.2015 CN 201510929137
(71) Applicant: Le Holdings (Beijing) Co., Ltd., Beijing 100025 (CN); Le Shi Internet Information & Technology Corp., Beijing, Beijing 100025 (CN)
(72) Inventor: SHI, Xuehui, Chao Yang District, Beijing 100025 (CN)
(74) Representative: Würmser, Julian
(86) International application number: PCT/CN2016/089531
(87) International publication number: WO 2017/101412

(57) **Abstract**

Embodiments of the present disclosure provide a play method, an apparatus and a mobile terminal device for an Android platform, where the method includes: acquiring at least one multimedia resource; parsing the corresponding multimedia resource in a time-sharing manner; performing audio and video separation on the parsed multimedia resource; decoding the audio and the video in parallel; and playing the corresponding audio and video synchronously after decoding. The embodiments, by calling a parsing interface in a time-sharing manner and calling a decoding interface in parallel, enable an Android platform to decode multiple paths of audio and video streams synchronously, so as to improve the efficiency.

## Description

The present disclosure claims priority to Chinese Patent Application No. 201510929132.7, filed with the Chinese Patent Office on December 14, 2015, which is incorporated herein by reference in its entirety.

### TECHNICAL FIELD

The present application relates to the field of video play, and more specifically, to a play method an apparatus and a mobile terminal device applied on an Android platform.

### BACKGROUND

As performance of an Android intelligent device is continuously improved, requirements of a user on video viewing are also continuously increased. Currently, an Android-based video player performs video processing by using video transmission and an encapsulation protocol of a Hyper Text Transfer Protocol Live Stream (HLS) system, in which only a single player instance can be called to perform audio and video processing with lower efficiency.

### SUMMARY

An objective of embodiments of the present disclosure lies in providing a play method, an apparatus and a mobile terminal device for an Android platform, to synchronously decode multiple paths of audio and video streams on an Android platform.

According to an aspect of an embodiment of the present disclosure, a play method applied on an Android platform is provided, where the method includes: acquiring at least one multimedia resource; parsing the corresponding multimedia resource in a time-sharing manner; performing audio and video separation on the parsed multimedia resource; decoding the audio and the video in parallel; and after decoding, playing the corresponding audio and video synchronously.

In an embodiment, the method further includes: acquiring a play request; parsing a play address of multimedia in the play request; and the method for acquiring at least one multimedia resource includes: acquiring the multimedia resource according to the play address.

In an embodiment, the parsing the corresponding multimedia resource in a time-sharing manner includes: creating a player instance; and dynamically enabling or disabling the player instance to call a parsing interface to parse the corresponding multimedia resource.

In an embodiment, the parsing the corresponding multimedia resource in a time-sharing manner further includes: acquiring audio and video parameter information in the multimedia resource.

In an embodiment, the decoding the audio and the video in parallel includes: creating an audio handle and a video handle; and separately starting threads to decode the audio by using the audio handle and to decode the video by using the video handle.

According to another aspect of an embodiment of the present disclosure, a play apparatus applied on an Android platform is provided, where the apparatus includes: a multimedia resource acquiring unit configured to acquire at least one multimedia resource; a multimedia resource parsing unit configured to parse, in a time-sharing manner, the corresponding multimedia resource acquired by the multimedia resource acquiring unit; a multimedia resource separation unit configured to perform audio and video separation on the multimedia resource parsed by the multimedia resource parsing unit; a multimedia resource decoding unit configured to decode the audio and the video in parallel acquired by the multimedia resource separation unit; and a multimedia resource play unit configured to play the corresponding audio and video synchronously after being decoded by the multimedia resource decoding unit.

In an embodiment, the apparatus further includes: a play request acquiring unit configured to acquire a play request; and a play address parsing unit configured to parse a play address of multimedia in the play request acquired by the play request acquiring unit, where the multimedia resource acquiring unit is specifically configured to acquire the multimedia resource according to the play address acquired by the play address parsing unit.

In an embodiment, the multimedia resource parsing unit includes: a player instance creating subunit configured to create a player instance; and a multimedia resource parsing subunit configured to dynamically enable or disable the player instance created by the player instance creating subunit to call a parsing interface to parse the corresponding multimedia resource.

In an embodiment, the multimedia resource decoding unit includes: a handle creating subunit configured to create an audio handle and a video handle; and a multimedia resource decoding subunit configured to separately start threads to decode the audio by using the audio handle created by the handle creating subunit and decode the video by using the video handle.

According to another aspect of an embodiment of the present disclosure, an Android mobile terminal device is provided, where the Android mobile terminal device includes the play apparatus applied on an Android platform as described above.

The method, the apparatus, and the mobile terminal device applied for multimedia preview provided according to the embodiments of the present disclosure, by calling a parsing interface in a time-sharing manner and calling a decoding interface in parallel, enable an Android platform to decode multiple paths of audio and video streams synchronously, so as to improve the efficiency.

### BRIEF DESCRIPTION OF THE DRAWINGS

Fig. 1 shows a flowchart of a play method applied on an Android platform according to Embodiment 1 of the present disclosure;
Fig. 2 shows a flowchart of a play method applied on an Android platform according to Embodiment 2 of the present disclosure;
Fig. 3 shows a schematic structural diagram of a play apparatus applied on an Android platform according to Embodiment 3 of the present disclosure; and
Fig. 4 shows a schematic structural diagram of a play apparatus applied on an Android platform according to Embodiment 4 of the present disclosure.

### DETAILED DESCRIPTION

The following describes exemplary embodiments of the present disclosure in detail with reference to the accompanying drawings.

### Embodiment 1

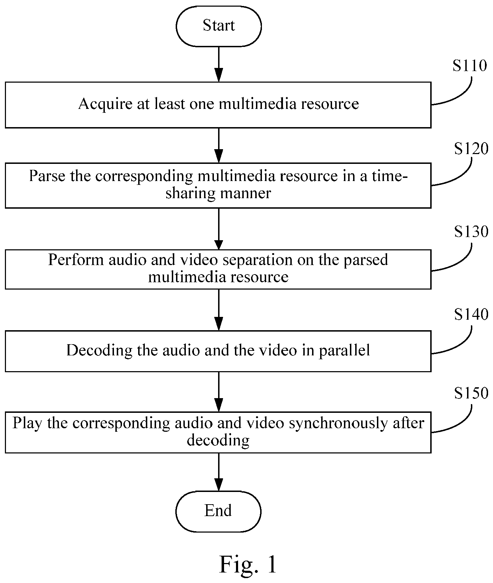

Fig. 1 is a flowchart showing a play method applied on an Android platform according to Embodiment 1 of the present disclosure. With reference to Fig. 1, the play method, applied on an Android platform, in this embodiment of the present disclosure includes the following steps:
in step S110: acquiring at least one multimedia resource.

Multimedia may be a video and/or an audio, and an execution body of the method is a mobile terminal device installed with an Android system, and the terminal device includes but is not limited to: a mobile phone, a tablet computer, and/or a smart television, etc.

In prior art, when a user plays a video and/or an audio by using a terminal device, because the terminal device has only one parsing interface, the terminal device generally will process/play only one multimedia resource. In this embodiment, to play multiple multimedia resources, the terminal device needs to acquire multiple multimedia resources, and store these resources in a local memory card for processing. For example, optionally, information of video resources, for example, Romance of Three Kingdoms, Water Margin, and A Dream of Red Mansions, etc., is acquired synchronously.

Instep S120: parse the corresponding multimedia resource in a time-sharing manner.

In this embodiment, time-sharing refers to that multiple resources share the same parsing interface. In this embodiment, parsing the corresponding multimedia resource in a time-sharing manner is performing sequential parsing on multiple multimedia resources. For example, after acquiring the videos of Romance of Three Kingdoms, Water Margin, and A Dream of Red Mansions, the terminal device parses Romance of Three Kingdoms, Water Margin, and A Dream of Red Mansions in sequence, respectively.

In this embodiment, a method for parsing the corresponding multimedia resource in a time-sharing manner further includes: acquiring audio and video parameter information in the multimedia resource.

Specifically, when the multimedia resource is parsed, parameters of the video and/or audio generally needs to be acquire, including a video resolution (for example, 176 pixels × 144 pixels, 352 pixels × 288 pixels, 704 pixels × 288 pixels, and 704 pixels × 576 pixels, etc.), a video frame rate (for example, 30Hz, 40Hz, and60Hz, etc.), an audio sampling rate (for example, 22.05KHz, 44.1KHz, and48KHz, etc.), a number of sound channels (for example, a single sound channel, two sound channels, and four sound channels), and a bit rate (for example, 160kbit/s,192 kbit/s, and320 kbit/s), etc.

A specific implementation manner of this embodiment is calling an output of a function as a parsing interface to parse the multimedia resource. For example, avformat_open_input() is used as a function for opening a multimedia data stream, and avformat_find_stream_info() is used as a function for parsing a parameter of the multimedia data stream, and output results of the two functions are used as a parsing interface.

Instep S130: perform audio and video separation on the parsed multimedia resource.

For example, performing audio and video separation on an episode of Romance of Three Kingdoms is processing of dividing sounds and images of the episode into two files. In this embodiment, an audio and video separation software or a built-in ffmpeg program in an Android platform may be used in the separation processing.

In this embodiment, separation on the multimedia resource takes a process, during which a multimedia resource not yet separated can be kept in the memory, and separated audios and videos may be temporarily placed in a buffer or may be stored in a preset folder in the memory card. For example, when separation is performed on an episode of Romance of Three Kingdoms, a folder "123" may be set in a memory card to store Romance of Three Kingdoms not yet separated, and folders "a" and "b" are set to respectively store separated audios and videos.

Instep S140:decode the audio and the video in parallel.

Specifically, "in parallel" refers to executing a group of programs at an independent asynchronous speed. In this embodiment, because the terminal device acquires multiple multimedia resources, after audio and video separation is performed on these multimedia resources, multiple groups of audios and multiple groups of videos are obtained. When decoding these audios and videos, the terminal device is capable of decoding synchronously within a time period.

In this embodiment, decoding interfaces used for decoding the audio and the video are respectively an audio card and a video card. Because a data volume of the audio is small, decoded data can be directly sent to a sound device; because a data column of the video is large, decoded data is still placed in the memory card.

Specifically, for Romance of Three Kingdoms after audio and video separation, the audios and videos are not decoded; a decoded audio is directly sent to a sound device, and a decoded video is placed in a decoded video buffer queue and/or a preset folder (for example, a folder "c") of the memory card; by decoding, undecoded video data in the folder "b" becomes less gradually, and decoded video data in the decoded video buffer queue and/or the folder "c" becomes more gradually. Preferably, compared with the audio, the data volume of the video is large, and the video may be decoded as priority.

In this embodiment, audio and video decoding may be performed after complete separation of audio and video. Preferably, audio and video separation and audio and video decoding can be performed synchronously; that is, during audio and video separation, audios and videos having already been separated are decoded synchronously, so as to improve the efficiency and save time.

Instep S150: after decoding, play the corresponding audio and video synchronously.

Specifically, because the terminal device acquires multiple multimedia resources, and obtains multiple groups of audios and videos after decoding, multiple multimedia resources can be played synchronously when the audios and videos are played synchronously. For example, Romance of Three Kingdoms, Water Margin, and A Dream of Red Mansions can be played synchronously on the terminal device by using multiple windows.

In this embodiment, multimedia play can be performed after all the audios and videos are decoded. Preferably, multimedia play and audio and video decoding are performed synchronously, so as to improve the efficiency and save time.

The play method for an Android platform provided in this embodiment of the present disclosure, by calling a parsing interface in a time-sharing manner and calling a decoding interface in parallel, enables an Android platform to decode multiple paths of audio and video streams synchronously, so as to improve the efficiency.

### Embodiment 2

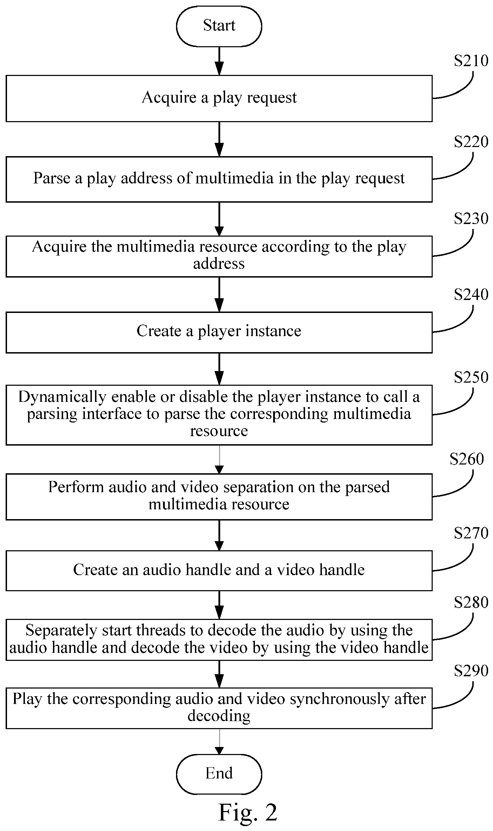

Fig. 2 is a flowchart showing a play method for an Android platform according to Embodiment 2 of the present disclosure. With reference to Fig. 2, the method for multimedia preview in this embodiment specifically includes the following steps:
in step S210: acquire a play request.
   Specifically, when a user plays a multimedia resource by using a mobile terminal device, the user clicks or installs a name or video frame of the multimedia resource, and the terminal device acquires the play request. Preferably, the terminal device can acquire play requests of multiple multimedia resources synchronously.
S220: parse a play address of multimedia in the play request.
   Specifically, the terminal device searches for a corresponding play address of the multimedia resource according to the play request, for example, a play address of Romance of Three Kingdoms, a play address of Water Margin, and a play address of A Dream of Red Mansion, etc.
In step S230: acquire the multimedia resource according to the play address.
   For example, resource information of Romance of Three Kingdoms, Water Margin, and A Dream of Red Mansion is separately acquired according to the play address of Romance of Three Kingdoms, the play address of Water Margin, and the play address of A Dream of Red Mansion.
   In this embodiment, the process step may be considered as a specific implementation manner of the foregoing S110.
In sted S240: create a player instance.

In this embodiment, instances refer to some database programs capable of supporting operation of a database. In this embodiment, a player instance refers to a program capable of supporting play, like a controller, which controls play of the multimedia resource.

Preferably, the terminal device can create multiple player instances to synchronously control multiple multimedia resources, so as to improve the efficiency and save time.

In step S250: dynamically enable or disable the player instance to call a parsing interface to parse the corresponding multimedia resource.

Because at a same time, one parsing interface can allow only one player instance to parse a corresponding multimedia resource, for multiple player instances, one player instance needs to start parsing, and the others stop parsing. After one player instance completes parsing, another player instance immediately parses the multimedia resource. In this way, dynamically enabling or disabling a player instance to call the parsing interface can make an operation more compact, thereby improving the efficiency.

In this embodiment, steps S240 and S250 can be considered as a specific implementation manner of step S120 of the foregoing Embodiment 1.

Instep S260: perform audio and video separation on the parsed multimedia resource.

Specifically, content of step S260 is the same as that of S130 in the foregoing Embodiment 1.

Instep S270: create an audio handle and a video handle.

Specifically, a handle is used to identify different objects or different instances of the same type of objects in an application program, so that a program can access information of a corresponding object by a handle, for example, a window, a button, an icon, a scroll bar, an output device, a control, or a file, etc. In this embodiment, after audio and video separation is performed, a corresponding handle is separately created for the audio and video, so as to provide an identifier.

In step S280: threads to decode the audio by using the audio handle and decode the video by using the video handle are started separately.

Specifically, when multiple audios and videos are decoded, each audio or video needs to start an independent thread for decoding by means of a corresponding handle, so as to improve the efficiency. For example, audios and videos of Romance of Three Kingdoms, audios and videos of Water Margin, and audios and videos of A Dream of Red Mansion all need to start an independent thread for decoding by means of a corresponding handle.

In this embodiment, steps S270 and S280 can be considered as a specific implementation manner of step S140 of the foregoing Embodiment 1.

Instep S290: after decoding, play the corresponding audio and video synchronously.

Specifically, content of step S290 is the same as that of step S150 in the foregoing Embodiment 1.

The play method for an Android platform provided in this embodiment of the present disclosure, by calling a parsing interface in a time-sharing manner and performing audio and video separation on multiple multimedia resources, and calling a decoding interface in parallel by using multiple player instances to synchronously decode audios and videos of the multimedia resources, enables an Android platform to decode multiple paths of audio and video streams synchronously, so as to improve the efficiency. In addition, the terminal device can further play different multiple resources by multiple windows, thereby improving user viewing experience.

### Embodiment 3

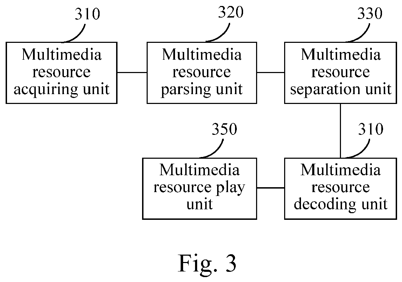

Fig. 3 is a schematic structural diagram showing a play apparatus for an Android platform according to Embodiment 3 of the present disclosure.

With reference to Fig. 3, the apparatus for multimedia preview in this embodiment can be used to execute the process steps of the foregoing Fig. 1. The apparatus includes: a multimedia resource acquiring unit 310, a multimedia resource parsing unit 320, a multimedia resource separation unit 330, a multimedia resource decoding unit 340, and a multimedia resource play unit 350.

The multimedia resource acquiring unit 310 acquires at least one multimedia resource.

The multimedia resource parsing unit 320 parses, in a time-sharing manner, the corresponding multimedia resource acquired by the multimedia resource acquiring unit 310.

The multimedia resource separation unit 330 performs audio and video separation on the multimedia resource parsed by the multimedia resource parsing unit 320.

The multimedia resource decoding unit 340 decodes the audio and the video in parallel acquired by the multimedia resource separation unit 330.

The multimedia resource play unit 350 plays the corresponding audio and video synchronously after being decoded by the multimedia resource decoding unit 340.

The play apparatus for an Android platform provided in this embodiment of the present disclosure, by calling a parsing interface in a time-sharing manner and calling a decoding interface in parallel, enables an Android platform to decode multiple paths of audio and video streams synchronously, so as to improve the efficiency.

### Embodiment 4

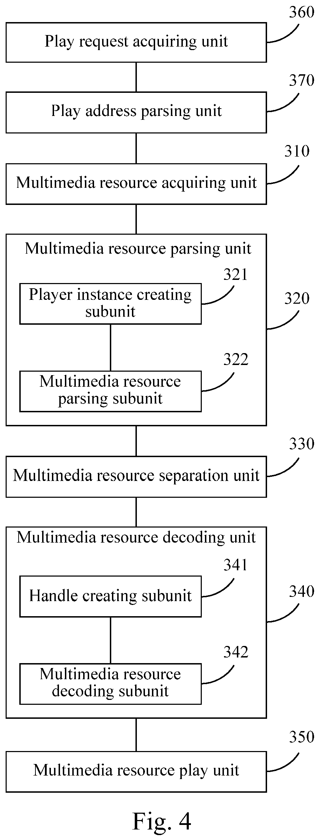

Fig. 4 is a schematic structural diagram showing a play apparatus for an Android platform according to Embodiment 4 of the present disclosure.

With reference to Fig. 4, the apparatus for multimedia preview in this embodiment can be used to execute the process steps of the foregoing Fig. 2. The apparatus includes: a play request acquiring unit 360, a play address parsing unit 370, a multimedia resource acquiring unit 310, a multimedia resource parsing unit 320, a multimedia resource separation unit 330, a multimedia resource decoding unit 340, and a multimedia resource play unit 350.

The play request acquiring unit 360 acquires a play request.

The play address parsing unit 370 parses a play address of multimedia in the play request acquired by the play request acquiring unit 360.

The multimedia resource acquiring unit 310 o acquires the multimedia resource according to the play address acquired by the play address parsing unit 370.

The multimedia resource parsing unit 320 parses, in a time-sharing manner, the corresponding multimedia resource acquired by the multimedia resource acquiring unit 310.

In this embodiment, the multimedia resource parsing unit includes: a player instance creating subunit 321 and a multimedia resource parsing subunit 322.

The player instance creating subunit 321 creates a player instance.

The multimedia resource parsing subunit 322 dynamically enables or disables the player instance created by the player instance creating subunit 321 to call a parsing interface to parse the corresponding multimedia resource.

The multimedia resource separation unit 330 performs audio and video separation on the multimedia resource parsed by the multimedia resource parsing unit 320.

The multimedia resource decoding unit 340 decodes the audio and the video in parallel acquired by the multimedia resource separation unit 330.

In this embodiment, the multimedia resource decoding unit includes: a handle creating subunit 341 and a multimedia resource decoding subunit 342.

The handle creating subunit 341 creates an audio handle and a video handle.

The multimedia resource decoding subunit 342 separately starts threads to decode the audio by using the audio handle created by the handle creating subunit and decode the video by using the video handle.

The multimedia resource play unit 350 plays the corresponding audio and video synchronously after being decoded by the multimedia resource decoding unit 340.

The play apparatus for an Android platform provided in this embodiment of the present disclosure, by calling a parsing interface in a time-sharing manner and performing audio and video separation on multiple multimedia resources, and calling a decoding interface in parallel by using multiple player instances to synchronously decode audios and videos of the multimedia resources, enables an Android platform to decode multiple paths of audio and video streams synchronously, so as to improve the efficiency. In addition, the terminal device can further play different multiple resources by multiple windows, thereby improving user viewing experience.

### Embodiment 5

An embodiment of the present disclosure further provides an Android mobile terminal device, where the device includes the foregoing apparatus for multimedia preview.

Specifically, the mobile terminal device may be a mobile phone, a tablet computer, or a smart television, etc.

The Android mobile terminal device provided in this embodiment of the present disclosure, by calling a parsing interface in a time-sharing manner and performing audio and video separation on multiple multimedia resources, and calling a decoding interface in parallel by using multiple player instances to synchronously decode audios and videos of the multimedia resources, enables an Android platform to decode multiple paths of audio and video streams synchronously, so as to improve the efficiency. In addition, the terminal device can further play different multiple resources by multiple windows, thereby improving user viewing experience.

It should be noted that according to the needs of implementations, various steps/parts described in the present application may be divided into more steps/parts, and also two or more steps/parts or some operations of steps/parts may be combined into a new step/part, so as to achieve the objective of the present disclosure.

The foregoing method according to the present disclosure may be implemented in hardware or firmware, or may be implemented as software or computer code that can be stored in a recording medium (for example, a CD ROM, a RAM, a floppy disk, a hard disk or a magneto-optical disc), or may be implemented as computer code downloaded from a network that is originally stored in a remote recording medium or a non-transitory machine readable medium, and will be stored in a local recording medium. Therefore, the method described herein can be processed by such software that is stored in a recording medium that uses a general-purpose computer, a special-purpose processor or programmable or special-purpose hardware (for example, an ASIC or an FPGA). It may be understood that a computer, a processor, a microprocessor controller or programmable hardware includes a storage component (for example, a RAM, a ROM, and a flash memory, etc.) that can store or receive software or computer code. When the software or computer code is accessed and executed by the computer, the processor or the hardware, the processing method described herein is implemented. In addition, when the general-purpose computer accesses the code that is used for implementing processing shown herein, execution of the code converts the general-purpose computer to a special-purpose computer configured to execute the processing shown herein.

The foregoing descriptions are merely specific implementation manners of the present disclosure, but the protection scope of the present disclosure is not limited thereto. Any variations or alternatives that can be readily conceived of by a person skilled in the art within the technical scope of the present disclosure should fall within the protection scope of the present disclosure. Therefore, the protection scope of the present disclosure should be as defined by the protection scope of the claims.

## Claims

1. A play method for an Android platform, wherein the method comprises:
acquiring at least one multimedia resource;
parsing the corresponding multimedia resource in a time-sharing manner;
performing audio and video separation on the parsed multimedia resource;
decoding the audio and the video in parallel; and
playing the corresponding audio and video synchronously after decoding.

2. The method according to claim 1, wherein the method further comprises:
acquiring a play request; and
parsing a play address of multimedia in the play request;
the acquiring at least one multimedia resource comprises: acquiring the multimedia resource according to the play address.

3. The method according to claim 1 or 2, wherein the parsing the corresponding multimedia resource in a time-sharing manner comprises:
creating a player instance; and
dynamically enabling or disabling the player instance to call a parsing interface to parse the corresponding multimedia resource.

4. The method according to claim 3, wherein the parsing the corresponding multimedia resource in a time-sharing manner further comprises:
acquiring audio and video parameter information in the multimedia resource.

5. The method according to any one of claims 1 to 4, wherein the decoding the audio and the video in parallel comprises:
creating an audio handle and a video handle; and
separately starting threads to decode the audio by using the audio handle and decode the video by using the video handle.

6. A play apparatus for an Android platform, wherein the apparatus comprises:
a multimedia resource acquiring unit configured to acquire at least one multimedia resource;
a multimedia resource parsing unit configured to parse, in a time-sharing manner, the corresponding multimedia resource acquired by the multimedia resource acquiring unit;
a multimedia resource separation unit configured to perform audio and video separation on the multimedia resource parsed by the multimedia resource parsing unit;
a multimedia resource decoding unit configured to decode the audio and the video in parallel acquired by the multimedia resource separation unit; and
a multimedia resource play unit configured to play the corresponding audio and video synchronously after being decoded by the multimedia resource decoding unit.

7. The apparatus according to claim 6, wherein the apparatus further comprises:
a play request acquiring unit configured to acquire a play request; and
a play address parsing unit configured to parse a play address of multimedia in the play request acquired by the play request acquiring unit;
the multimedia resource acquiring unit is specifically configured to acquire the multimedia resource according to the play address acquired by the play address parsing unit.

8. The apparatus according to claim 6 or 7, wherein the multimedia resource parsing unit comprises:
a player instance creating subunit configured to create a player instance; and
a multimedia resource parsing subunit configured to dynamically enable or disable the player instance created by the player instance creating subunit to call a parsing interface to parse the corresponding multimedia resource.

9. The apparatus according to claim 6, 7, or 8, wherein the multimedia resource decoding unit comprises:
a handle creating subunit configured to create an audio handle and a video handle; and
a multimedia resource decoding subunit configured to separately start threads to decode the audio by using the audio handle created by the handle creating subunit and decode the video by using the video handle.

10. An Android mobile terminal device, wherein the Android mobile terminal device comprises the play apparatus for an Android platform according to any one of claims 6 to 9.
